# EUROPÄISCHE PATENTSCHRIFT

(11) **EP 4 045 272 B1**
(45) Veröffentlichungstag und Bekanntmachung des Hinweises auf die Patenterteilung: **16.04.2025**
(21) Anmeldenummer: 20792962.1
(22) Anmeldetag: 14.10.2020
(51) Int. Cl.: B29C 48/10, B29C 48/92, B29C 48/90, B29C 48/88, B29C 48/885, B29C 55/28

(54) **VORRICHTUNG ZUR HERSTELLUNG VON INLINE GERECKTEN SCHLAUCHFOLIEN IM BLASVERFAHREN**
DEVICE FOR PRODUCING INLINE-ORIENTED TUBULAR FILMS IN A BLOWING PROCESS
DISPOSITIF DE PRODUCTION DE FILMS TUBULAIRES ORIENTÉS EN LIGNE DANS UN PROCÉDÉ DE SOUFFLAGE

(30) Priorität: 16.10.2019 DE 102019127993
(43) Veröffentlichungstag der Anmeldung: 24.08.2022
(73) Patentinhaber: Windmöller & Hölscher KG, 49525 Lengerich (DE)
(72) Erfinder: BUSSMANN, Markus, 49525 Lengerich (DE); GOLUBSKI, Karsten, 49525 Lengerich (DE); VOSS, Henning, 49525 Lengerich (DE); SOLLERT, Manuel, 49525 Lengerich (DE)
(86) Internationale Anmeldenummer: PCT/EP2020/078829
(87) Internationale Veröffentlichungsnummer: WO 2021/074181

(56) Entgegenhaltungen:
- EP-A1- 1 719 602
- EP-A2- 0 335 411
- EP-B1- 0 335 411
- EP-B1- 1 719 602
- WO-A1-2018/215945
- WO-A2-2012/080276
- JP-U- S6 273 922
- US-A1- 2004 113 331

## Beschreibung

Die vorliegende Erfindung betrifft eine Vorrichtung zur Herstellung von inline gereckten Schlauchfolien im Blasverfahren.

Zur Herstellung von Schlauchfolien im Blasverfahren dienen üblicherweise Blasfolienextrusionsanlagen, die bereits seit langer Zeit im Einsatz sind. Solchen Anlagen werden Kunststoffe in granulierter Form zugeführt, die dann in Extrudern unter hohen Druckeinwirkungen zu einer viskosen Masse plastifiziert werden. Diese Masse, die aufgrund des Druckes eine hohe Temperatur aufweist, wird in einem Blaskopf ringförmig ausgebildet und entweicht dem Blaskopf durch eine Ringdüse. Unmittelbar nach dem Verlassen der Ringdüse bildet die Masse bereits einen Folienschlauch. Dieser Folienschlauch kann jedoch, da er noch nicht vollständig abgekühlt ist, in seinem Durchmesser verändert werden. In der Regel wird der Durchmesser vergrößert, indem in den Innenraum des Folienschlauchs Druckluft eingeblasen wird. Damit der Folienschlauch immer einen konstanten Durchmesser aufweist, wird er auf Abstand zu oder direkt entlang von Folienführungselementen geführt. Diese Anordnung der Folienführungselemente wird auf dem Gebiet der Blasfolienextrusionsanlagen als Kalibrierkorb bezeichnet.

Nach dem Durchlaufen des Kalibrierkorbs kann der Folienschlauch in einem reversierenden Wendeabzug flachgelegt, verlegt und anschließend in einer Reckanlage monoaxial in Maschinenrichtung verstreckt werden.

Mit dem Recken von thermoplastischen Folien können deren Eigenschaften gezielt verändert werden. Solche Eigenschaften sind beispielsweise die Transparenz oder die Festigkeit. Ein solches Recken, das in Quer- und/oder Längsrichtung der Folienbahn erfolgen kann, kann direkt nach dem Extrusionsprozess inline erfolgen. Das Recken bzw. Verstrecken von thermoplastischen Folien ist beispielsweise in der WO 2006/063641 A1 und in der WO 2011/057918 A1 beschrieben.

Bei der Herstellung von Schlauchfolien kommen Foliendickenprofilregelsysteme mit segmentierten Regelzonen zum Einsatz. Durch diese Systeme lassen sich die Foliendickenprofile derart regeln, dass die Dickenabweichungen über den gesamten Schlauchumfang möglichst gering sind. Solche Foliendickenprofilregelsystem werden durch die US 2004/0113331 A1, die WO 2012/080276 und die EP1719602A1 offenbart.

Aus der DE 39 411 85 A1 ist so beispielsweise ein Verfahren zur Regelung der Foliendicke von Schlauchfolien aus Blasfolienanlagen mit nachgeschalteter axialer bzw. biaxialer Verstreckung der aufgeblasenen Schlauchfolien in einem Ofen bekannt, so dass eine Endfolie entsteht, die möglichst geringe Abweichungen in der Dicke aufweist.

Bei der Längsverstreckung in einer Reckanlage wird die Folie entsprechend des Reckgrades in Maschinenrichtung gedehnt und dadurch die Foliendicke reduziert. Gleichzeitig schnürt die Folie in Querrichtung ein, wodurch sich die Breite der Folie verringert. Diese Einschnürung hat zur Folge, dass die gereckte Folie von der Folienmitte in Richtung der Folienränder zunehmend geringfügiger dicker wird, obwohl sie zuvor im Blasverfahren auf eine möglichst konstante Dicke geregelt wurde. Besonders ausgeprägt ist diese Dickenzunahme an den Folienrandbereichen. Dieses verursacht beim anschließenden Aufwickeln der Folie einen Kantenaufbau in Foliendicke. Die Folienbahn wird an den Rändern mit zunehmendem Wickeldurchmesser immer mehr gedehnt.

Um Folien mit möglichst gleichmäßigem Dickenprofil, wie sie insbesondere zum Bedrucken oder Laminieren gefordert werden, herzustellen, müssen die Folienränder, die dem gewünschten Dickenprofil nicht entsprechen, weggeschnitten werden. Durch dieses als Besäumen bezeichnetes Wegschneiden geht allerdings ein Großteil der Folienbreite verloren. So fallen auf jeder Seite der Folie bis ca. 200 mm durch das Besäumen, d. h. das Wegschneiden weg.

Aus der EP 2 277 681 B1 ist ein gattungsgemäßes Verfahren bekannt geworden, bei dem das Foliendickenprofil der in der Blasfolienanlage hergestellten Schlauchfolie so geregelt wird, dass durch das Recken eine Folie mit einem Dickenprofil mit möglichst geringen Abweichungen von der mittleren Foliendicke über die gesamte Folienbreite hergestellt wird. Hierzu wird im Blasfolienprozess eine Schlauchfolie hergestellt, die zwei gegenüberliegende Dünnstellen aufweist. Bei der Flachlegung der Schlauchfolie wird nun darauf geachtet, dass die Dünnstellen im Folienrandbereich liegen und dass die verstreckte Folie dann ein Dickenprofil mit möglichst geringen Abweichungen von der mittleren Foliendicke aufweist. Die gezielt eingebrachten Dünnstellen kompensieren also die später beim Recken entstehenden Verdickungen im Randbereich, sodass sich eine bis in den Randbereich hin erstreckende gleichmäßige Foliendicke ergeben soll.

Zum gezielten Einbringen der der Dünnstellen sind gemäß der EP 2 277 681 B1 segmentierte Regelzonen im Kühlring vorgesehen, die beispielsweise aus Heizpatronen bestehen können. Ein Nachteil einer derartigen Profilregelung besteht allerdings darin, dass die segmentierten Regelzonen im Kühlring häufig am Limit ihrer möglichen Leistung betrieben werden müssen und damit die Genauigkeit sowie die Geschwindigkeit des Regelvorgangs einschränken.

Zum Überwinden dieser Problematik schlägt die WO 2018/215945 A1 einen zusätzlichen, sich drehenden Ring vor, mit welchem im Bereich des Kühlrings die Folie an den späteren Falzkanten der flachgelegten Folienbahn zusätzlich temperiert, so dass der Folienschlauch bereits hier dünner wird, um der späteren Randaufdickung entgegenzuwirken. Die Drehung des zusätzlichen Rings wird mit der Drehung des reversierenden Abzugs synchronisiert. Dieser Ansatz verursacht einen großen Aufwand und dürfte wegen der notwendigen Synchronisierung weiterhin ungenau sein.

Die EP 0 335 411 A2 und die JPS6273922U schlagen ein biaxiales Verstrecken eines wiederaufgeblasenen, zuvor bereits flachgelegten Folienschlauches vor. Damit entfällt bereits die Problematik des Neck-Ins und der Randaufdickung, so dass keine vorherige Erzeugung von Dünnstellen notwendig ist.

Aufgabe der Erfindung ist es daher, die Genauigkeit und die Geschwindigkeit des bekannten Dünnstellen-Regelsystems zu erhöhen.

Diese Aufgabe wird durch die Merkmale des Patentanspruchs 1 gelöst. Weitere bevorzugte Ausführungsformen finden sich in den Unteransprüchen.

Durch die erfindungsgemäße Aufschaltung eines zweiten Dünnstellen-Regelsystems werden die folgenden Vorteile erzielt:
- Dünnstellen können auch bei Reversierung exakt an den gewünschten Stellen eingebracht werden (z. B. Falzkante).
- Nicht exakt positionierte Dünnstellen des ersten Dünnstellen-Regelsystems werden eliminiert, wodurch bei der Aufwicklung eine bessere Planlage der Folie erreicht wird.
- Zur Einbringung von Dünnstellen stehen ein größerer Regelhub und eine größere Regelgeschwindigkeit zur Verfügung.
- In Kombination mit dem ersten Dünnstellen-Regelsystem kann die nötige Heizleistung der Heizpatronen im Kühlring reduziert werden.
- Das Dickenprofil der gereckten Folie hat eine geringere Abweichung gegenüber dem Sollprofil. Hierdurch kann der Randbeschnitt reduziert werden.

Weitere Einzelheiten und Vorteile der Erfindung werden anhand der beigefügten Zeichnungen beschrieben.
- Fig. 1: zeigt eine Seitenansicht der erfindungsgemäßen Blasfolienanlage,
- Fig. 2: zeigt eine Seitenansicht der nachgeschalteten Reckanlage,
- Fig. 3: zeigt eine Seitenansicht des nachgeschalteten Wicklers und
- Fig. 4: zeigt eine perspektivische Ansicht der Flachlegeeinheit aus Fig. 1.

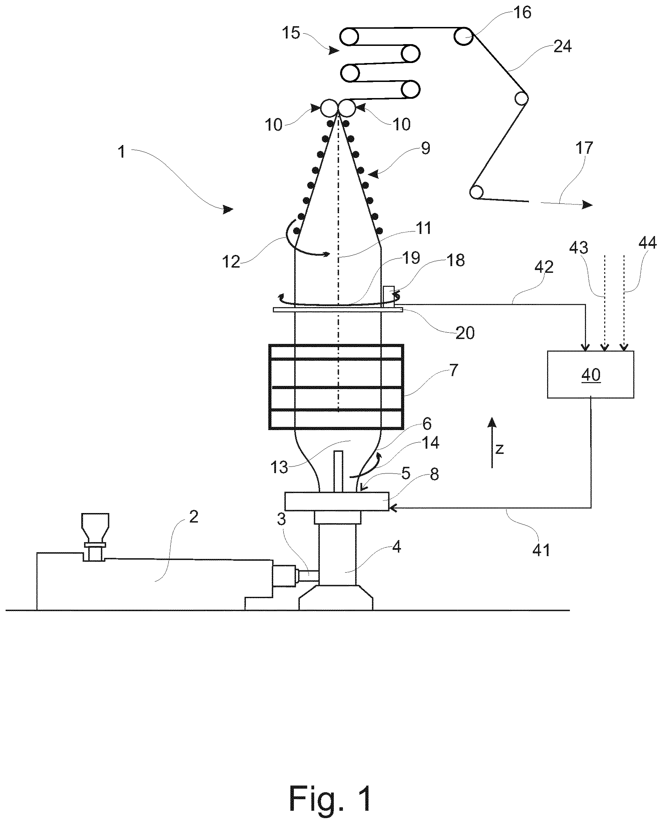

Fig. 1 zeigt eine Blasfolienanlage 1 zur Herstellung eines Folienschlauchs. Mit dem Extruder 2 wird Kunststoffgranulat zur Schmelze gebracht und über die Leitung 3 dem Blaskopf 4 zugeführt. Im Blaskopf 4 wird die Kunststoffschmelze in einen zylindrischen Schmelzestrom überführt, der dann aus einem Ringspalt 5 des Kühlrings 8 in Abzugsrichtung z als Folienschlauch 6 herausziehbar ist. Der noch nicht verfestigte Folienschlauch 6 wird von innen mit einem leichten Überdruck auf den Durchmesser des Kalibrierkorbs 7 aufgeblasen.

In dem Kühlring 8 befinden sich segmentierte Regelzonen eines ersten Dünnstellen-Regelsystems, das die segmentierten Regelzonen derart ansteuert, dass beim nachfolgenden Verstrecken eine Folien mit einem Dickenprofil mit möglichst geringen Abweichungen von der mittleren Foliendicke über die gesamte Folienbreite hergestellt wird.

Nach dem Kalibrierkorb 7 wird der Folienschlauch 6 der Flachlegeeinheit 9 zugeführt, in der der kreisrunde Folienschlauch zunächst in einen ellipsenförmigen Querschnitt mit einer zunehmenden Exzentrizität bildet, bis daraus schließlich von den beiden Abzugswalzen 10 eine doppellagige Folienbahn gebildet wird.

Die Flachlegeeinrichtung 9 ist drehbar angeordnet, wobei die Drehachse im Wesentlichen mit der Schlauchachse 11, die in der Figur 1 durch eine strichpunktierte Linie angedeutet ist, fluchtet. Die Drehbarkeit der Flachlegeeinrichtung ist mit dem Pfeil 12 angedeutet.

Der Blaskopf 8 ist in verschiedene Umfangsabschnitte unterteilt. Jeder Umfangsabschnitt des Blaskopfs 8 ist in der Lage, den Folienschlauch mit einem über den Umfang des Folienschlauches unterschiedlichen Luftstrom und/oder mit einer über den Umfang des Folienschlauches variierenden Temperatur zu beaufschlagen. Die Umfangsabschnitte des Folienschlauches, die geringer gekühlt werden, bilden eine Dünnstelle 13 aus. Bei einer größeren Kühlwirkung wird dagegen eine Dickstelle ausgebildet.

Damit die Dünnstelle immer an einer festen Position der Flachlegevorrichtung gelangt, ist es auch erforderlich, dass sich die Dünnstelle entlang des Umfangs bewegt, was in der Figur mit dem Pfeil 14 angedeutet ist. Dieses Wandern der Dünnstelle wird dadurch realisiert, dass der in Richtung des Pfeils 14 nächstliegende Umfangsabschnitt des Blaskopfs 8 in seinen Parametern verändert wird, um nun benachbart zu dem Umfangsabschnitt des Folienschlauches, der gerade eine Dünnstelle aufweist, eine Dünnstelle zu erzeugen. Die aktuelle Dünnstelle wird zurückgefahren, indem der betreffende Umfangsabschnitt des Blaskopfs 8 nun wieder stärker kühlend auf den ihm zugeordneten Winkelabschnitt einwirkt.

Um ein Dickenprofil des Folienschlauches 6 aufnehmen zu können, ist eine erste Messeinheit 18 vorgesehen, die in Transportrichtung z gesehen bevorzugt zwischen dem Kalibrierkorb 7 und der Flachlegeeinrichtung 9 angeordnet ist. Die erste Messeinheit 18 kann an der jeweiligen Position die Wanddicke des Folienschlauchs erfassen. Zur Bildung eins Profils kann die erste Messeinheit 18 außerdem um den Folienschlauch herum bewegt werden, was durch den Doppelpfeil 19 angedeutet ist. Zur Bewegung der ersten Messeinheit 18 ist diese auf einer Schiene 20 verschiebbar angeordnet.

Des weiteren ist eine Steuereinheit 40 vorgesehen, die über die Leitung 42 die Messwerte der ersten Messeinheit 18 empfängt und mit welcher der Blaskopf 8 über die Leitung 41 derart ansteuerbar ist, dass ein gewünschtes Dickenprofil erzeugbar ist. Das Dickenprofil und die hierzu notwendigen Steuerparameter können dynamisch für die einzelnen Segmente der Fluidbeaufschlagungseinrichtung erzeugt werden, so dass das entstehende Dickenprofil in Phase mit der Drehung der Flachlegeeinrichtung mitwandert.

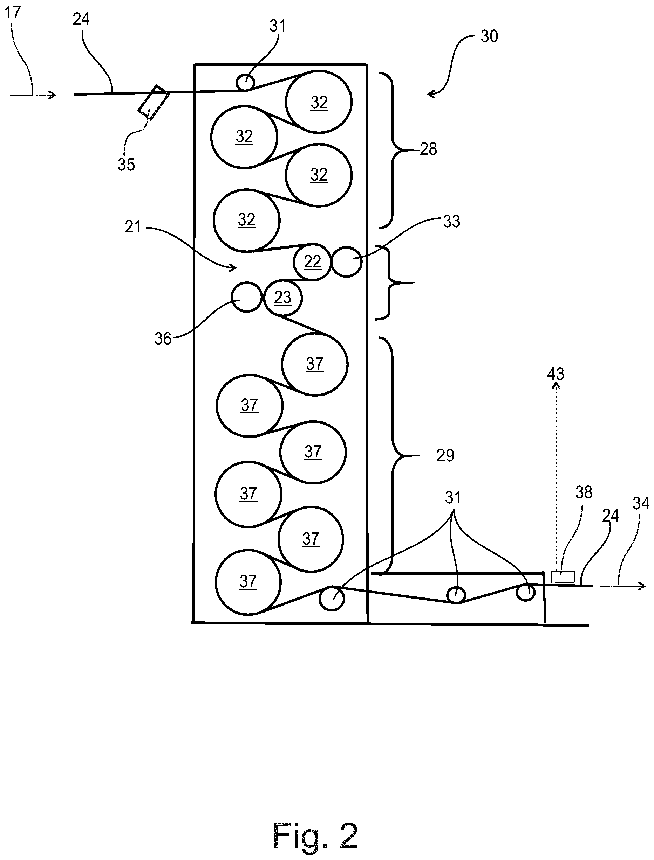

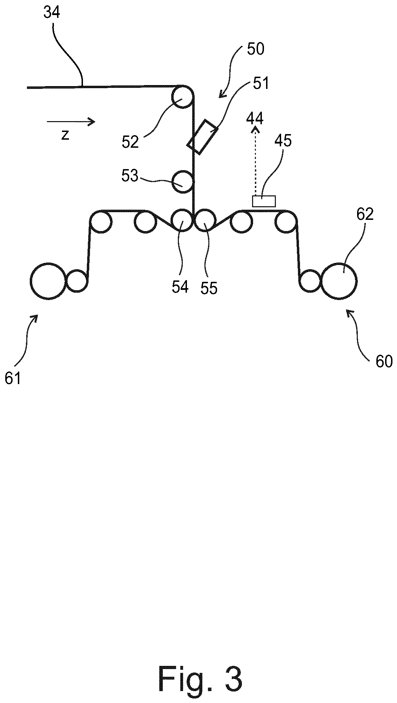

Zusätzlich oder alternativ kann die Steuereinheit 40 auch die Messwerte von einer zweiten Messeinheit 38 (in Fig. 2 dargestellt) oder von einer dritten Messeinheit 45 (in Fig. 3 dargestellt) auswerten.

Die Einflussfaktoren der drei Messeinheiten können gewichtet bei der Modifizierung der Steuerbefehle berücksichtigt werden.

Hinter den Abzugswalzen 10 durchläuft die doppellagige Folienbahn einen reversierenden Wendeabzug 15, welcher die Aufgabe hat, den flachgelegten Folienschlauch von der Flachlegevorrichtung zur ortfesten Walze 16 zu führen. Der Pfeil 17 deutet an, dass dieser Folienschlauch nun zur Weiterverarbeitung geführt wird.

Fig. 2 zeigt eine Reckanlage 30, welche sich inline an die in Figur 1 gezeigte Blasfolienanlage 1 anschließt. Die Folienbahn 24 durchläuft zunächst eine Leitwalze 31 und dann mehrere Heizwalzen 32. Die Aufgabe der Heizwalzen 32 besteht darin, die bereits völlig oder teilweise erkaltete Folienbahn 24 wieder auf eine Temperatur zu bringen, die für einen Streck- oder Reckprozess ausreicht.

Nachdem die Folienbahn 24 in dem Bereich 28 der Heizwalzen 32 wieder auf eine Strecktemperatur gebracht worden ist, läuft sie in den Bereich der Streckwalze 22 und der Nipwalze 33 ein und durchquert den Spalt zwischen diesen beiden Walzen 22, 33. Daraufhin durchläuft die Folienbahn 24 den Streckspalt 21, um dann die Oberfläche der Streckwalze 23 zu erreichen und den Streckspalt 21 zu verlassen. Diese Streckwalze 23 bildet mit der Nipwalze 36 einen Walzenspalt. Aufgrund einer geringeren Umfangsgeschwindigkeit des ersten Walzenpaares 22, 33 gegenüber dem zweiten Walzenpaar 23, 36 wird die Folienbahn 24 in dem Streckspalt 21 gelängt, also gestreckt. Dabei treten zwei Effekte auf, die nicht gewünscht sind und es notwendig machen, an den Seiten der Folienbahnen Längsstreifen abzutrennen. Der erste Effekt ist eine Reduzierung der Folienbreite während des Streckens (das so genannte Neckin). Der zweite Effekt ist ein Aufdicken der Ränder der Folienbahn. Es kann vorgesehen sein, die Größe des Streckspaltes, also der Abstand zwischen der Ablösekante der Folienbahn 24 von der Walze 22 bis zur Auftreffkante der Folienbahn auf die Walze 23, veränderbar auszuführen. Auf diese Weise ist es möglich, die Größe des Neck-ins und/oder des Aufdickens der Folienbahn an ihren Rändern zu beeinflussen.

Nach dem Durchlaufen des Streckspaltes, von denen es auch mehrere in Reihe geben kann, erreicht die Folienbahn 24 den Bereich 29, der jeweils mit dem Bezugszeichen 37 bezeichnete Kühlwalzen umfasst, in dem die Folienbahn 24 wieder abgekühlt wird. Nach dem Verlassen dieses Bereichs 29 hat die Folienbahn 24 wieder eine etwas niedrigere Temperatur erreicht, so dass ihre Oberfläche den Transport über die Leitwalze 31 in der Transportrichtung z ohne weitere Schäden überstehen kann. Die Folienbahn 24 wird anschließend in Richtung des Pfeils 34 weitergefördert und am Ende einer optionalen Weiterbearbeitung einer Wickeleinrichtung zugeführt, in welcher die Folienbahn als doppellagige Folienbahn oder getrennt in zwei einzelne Lagen aufgewickelt wird. Grundsätzlich ist dabei nicht ausgeschlossen, dass die Folienbahn oder die einzelnen Lagen der Folienbahn Längsschnitte erhalten und nebeneinander in mehreren Nutzen aufgewickelt werden.

Bevor die Folienbahn die Streckeinrichtung 30 erreicht, kann eine Schneid- oder Punktiereinrichtung 35 vorgesehen sein, mit welcher die doppellagige Folienbahn einschneidbar oder punktierbar ist, so dass sich Luft oder ein anderes Gas, welches sich noch innerhalb der doppellagigen Folienbahn befinden könnten, entweichen könnten. Diese Maßnahme führt zu einer verbesserten Qualität des Streckprozesses und zu einer erhöhten Genauigkeit der zu messenden Dickenprofile der doppellagigen Folienbahn. Insbesondere kann vorgesehen sein, dass die Folienbahn entlang oder nahe einer Seitenkante längs geschnitten wird, so dass die doppellagige Folienbahn nur noch über eine Seitenkante verbunden ist. Ferner kann es gewünscht sind, die doppellagige Folienbahn an ihren beiden Seitenkanten zu schneiden. Dies ist insbesondere ab bestimmten Dicken der Folienbahn notwendig, da möglicherweise der Lufttransport zu einer Seitenkante der Folienbahn nicht ausreichend schnell erfolgt.

In Transportrichtung hinter dem der Streckeinrichtung 30 ist eine zweite Messeinheit 38 vorgesehen, mit welcher ein Dickenprofil der doppellagigen Folienbahn nach ihrem Strecken aufnehmbar ist. Zu berücksichtigen ist jedoch, dass ohne weitere Maßnahmen hier nur die Gesamtdicke der Folienbahn messbar ist, also die Summe der Dicken der einzelnen Lagen. Denkbar ist jedoch, insbesondere wenn die doppellagige Folienbahn einen Längsschnitt erhalten hat, ein Kontrastmittel, wie etwa ein Metallblech, zwischen die beiden Lagen einzuführen, so dass jeweils eine Lage separat hinsichtlich ihrer Dicke vermessbar ist.

Auch die zweite Messeinheit 38 kann bewegbar entlang einer zumindest teilweise quer zur Transportrichtung sich erstreckenden Schiene angeordnet sein.

Fig. 3 zeigt eine Folientrenneinrichtung 50, die hier im Zusammenhang mit zwei Wickelstellen, 60, 61 gezeigt ist, aber auch unabhängig hiervon vorgesehen sein kann. Die Folienbahn 34 kann vor dem Einlauf in die Folientrenneinrichtung bereits einer Vorbehandlung unterzogen worden sein. Insbesondere kann bereits ein erster Randbeschnitt erfolgt sein, um bereits einen Teil der Aufdickungen am Rand abzuschneiden, was zu einer verbesserten Qualität einer optionalen Vorbehandlung führt. Innerhalb der Folientrenneinrichtung sind weitere Schneideinrichtungen 51, insbesondere in Form von Trennmessern, vorgesehen, die jeweils an einem Rand der noch doppellagigen Folienbahn den endgültigen Randbeschnitt durchführen. Die doppellagige Folienbahn wird dazu über Walzen 52 und 53 geführt, welche vor allem für die für den Randbeschnitt nötige Bahnspannung sorgen. Spätestens nach dem Randbeschnitt ist die doppellagige Folienbahn in zwei einzelne Lagen getrennt, welche jedoch noch direkt aufeinander liegen.

Die eigentliche Trennung der Lagen erfolgt durch die Walzen 54, 55, die einen Walzenspalt ausbilden. Nach dem Durchlaufen des Walzenspaltes wird die erste Lage der ersten Wickelstelle 60 zugeführt, wo sie über verschiedene weitere Walzen läuft und auf den Wickel 62 aufgewickelt wird.

Stromabwärts der Trenneinrichtung ist eine dritte Messeinheit 45 vorgesehen, deren Aufbau und Funktionsweise vorzugsweise der zweiten Messeinheit 38 gleicht. Über eine Datenleitung 44 werden die Messergebnisse (in Rohform oder als ausgewertetes Dickenprofil), beispielsweise per Draht und/oder drahtlos, der Auswerte- und Steuereinrichtung 40 zugeführt.

Die zweite Lage kann der Wickelstelle 61 zugeführt werden, deren Aufbau und Funktion identisch mit der ersten Wickelstelle ist. Auch kann zur Messung der zweiten Lage ebenfalls ein zweites Dickenmessgerät vorgesehen sein. Hier wird in Bezug auf Aufbau und Funktionsweise auf die Beschreibung im vorhergehenden Absatz verwiesen.

Die Dickenmessprofile, die stromabwärts der Trenneinrichtung aufgenommen werden, können fortwährend von der Auswerte- und/oder Steuereinrichtung aufaddiert werden, um so auch ein Rollensummenprofil, also die Addition der Dickenprofile der einzelnen Lagen in einem Wickel, aufnehmen zu können. In einer Blasfolienanlage mit einer Reversiereinrichtung, aber ohne eine Streckeinrichtung, werden Abweichungen der Foliendicken von der mittleren Foliendicken, also Dick- und/oder Dünnstellen, in axialer Richtung des Wickels verteilt, so dass insgesamt ein gleichmäßiger Umfang des Wickels entsteht. Ist jedoch eine Streckeinrichtung vorgesehen, können dadurch weitere Dick- oder Dünnstellen entstehen, die nicht mehr mit einer Reversierung ausgeglichen werden können. Durch das zuvor beschriebene Bilden eines Rollensummenprofils kann das Entstehen beispielsweise von Kolbenringen (lokale Aufdickungen) am Wickel frühzeitig erkannt werden und bei der Einstellung der Regelparameter für die Fluidbeaufschlagungsvorrichtung berücksichtigt werden.

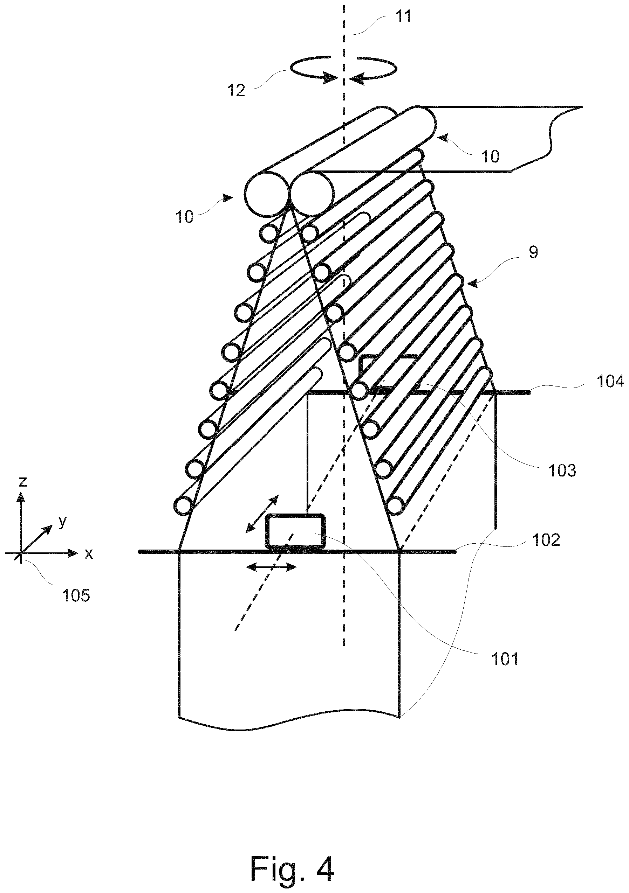

Fig. 4 zeigt eine perspektivische Ansicht der Flachlegeeinheit aus Fig. 1. Gleiche Teile sind mit den gleichen Bezugszeichen wie in Fig. 1 bezeichnet, so dass insoweit auf die Beschreibung gemäß Fig. 1 verwiesen wird. Die Richtungsbezeichnungen der folgenden Beschreibung orientieren sich an den Koordinaten x, y und z des Koordinatensystems 105.

Am unteren Rand der beiden dreieckigen Seitenbereiche der Flachlegeeinheit 9 befinden sich zwei Wärmequellen 101 und 103 in jeweils gegenüberliegender Position. Die beiden Wärmequellen 101 und 103 sind jeweils auf den Traversen 102 und 104 fixiert, wobei sich die Traversen 102 und 104 synchron mit der Reversierbewegung der Flachlegeeinheit 9 mitbewegen. Durch die synchrone Bewegung ist sichergestellt, dass die Profilierung exakt an der gewünschten Stelle eingebracht wird (z. B. im Bereich der Falzkante der durch die Abzugswalzen 10 gebildeten doppellagigen Folienbahn). Zusätzlich sind die Wärmequellen 101 und 103 in x-Richtung und y-Richtung in ihrer genauen Position justierbar, um die Genauigkeit der Profilierung weiter erhöhen zu können.

Die beiden Wärmequellen 101 und 103 werden von einem zweiten Dünnstellen-Regelsystem angesteuert, wobei das zweite Dünnstellen-Regelsystem dem ersten Dünnstellen-Regelsystem aufschaltbar ist. Die Profilierung erfolgt durch Wärmeeinbringung seitens der Wärmequellen 101 und 103, beispielsweise durch Konvektion oder IR-Strahlung. Durch die Wärmeeinbringung wird die Folie lokal auf eine Temperatur erwärmt, die ausreichend ist, um eine plastische Verformung durch den Blaseninnendruck zu ermöglichen. In dem erwärmten und verstreckten Bereich entsteht so eine Dünnstelle. Die Ausprägung der Dünnstelle wird durch die nachfolgenden Messeinheiten 38 und/oder 45 gemessen und über eine Variation der Heizleistung geregelt.

Das beschriebene zweite Dünnstellen-Regelsystem wird beim Reckprozess in Kombination mit dem ersten Dünnstellen-Regelsystem (das die Dünnstellen über segmentierte Regelzonen im Kühlring einbringt) betrieben. Denn bei dem ersten Dünnstellen-Regelsystem sind die segmentierten Regelzonen häufig am Limit ihrer möglichen Leistung und schränken somit die Genauigkeit sowie die Geschwindigkeit des Regelvorgangs ein. Die Profilierung kann somit insgesamt mit einer höheren Regelgeschwindigkeit sowie einem größeren Regelhub arbeiten, als dies bei einer alleinigen Regelung mit dem ersten Dünnstellen-Regelsystem möglich wäre. Außerdem wird sichergestellt, dass die eingebrachten Dünnstellen exakt im Bereich der Falzkante liegen. Durch den Einsatz des zweiten Dünnstellen-Regelsystems können die Heizpatronen im Kühlring bei niedrigerer Leistung arbeiten und haben somit mehr Regelhub, um das Folienprofil auszuregeln. Die Profilqualität und die Regelgeschwindigkeit können somit gesteigert werden.

| **Bezugszeichenliste** | |
|---|---|
| 1 | Blasfolienanlage |
| 2 | Extruder |
| 3 | Leitung |
| 4 | Blaskopf |
| 5 | Ringspalt |
| 6 | Folienschlauch |
| 7 | Kalibrierkorb |
| 8 | Kühlring |
| 9 | Flachlegeeinheit |
| 10 | Abzugswalze |
| 11 | Schlauchachse |
| 12 | Pfeil zur Andeutung der Drehbarkeit der Flachlegeeinrichtung |
| 13 | Dünnstelle |
| 14 | Pfeil zur Andeutung der Bewegung der Dünnstelle |
| 15 | Wendeabzug |
| 16 | Ortsfeste Walze |
| 17 | Pfeil zur Andeutung des Folienschlauchs zur Weiterverabeitung |
| 18 | Messeinheit |
| 19 | Doppelpfeil zur Andeutung der Bewegung der Messeinheit 18 |
| 20 | Schiene |
| 21 | Streckspalt |
| 22 | Erstes Walzenpaar |
| 23 | Streckwalze |
| 24 | Folienbahn |
| 25 | |
| 26 | |
| 27 | |
| 28 | |
| 29 | Bereich, der Kühlwalzen 37 umfasst |
| 30 | Streckeinrichtung |
| 31 | Leitwalze |
| 32 | |
| 33 | Nipwalze |
| 34 | Folienbahn |
| 35 | Punktiereinrichtung |
| 36 | Zweites Walzenpaar |
| 37 | |
| 38 | Zweite Messeinheit |
| 39 | |
| 40 | Auswerte- und Steuereinrichtung |
| 41 | |
| 42 | |
| 43 | |
| 44 | Datenleitung |
| 45 | Dritte Messeinheit |
| 50 | Folientrenneinrichtung |
| 51 | Schneideirichtungen |
| 52 | Walze |
| 53 | Walze |
| 54 | Walze |
| 55 | Walze |
| 60 | Erste Wickelstelle |
| 61 | Wickelstelle |
| 62 | Wickel |
| 100 | |
| 101 | Wärmequelle |
| 102 | Traverse |
| 103 | Wärmequelle |
| 104 | Traverse |
| 105 | Koordinatensystem |

## Patentansprüche

1. Vorrichtung zur Herstellung von inline gereckten Schlauchfolien (6, 24) im Blasverfahren,
mit einer Blasfolienanlage (1) bestehend aus einem Extruder (2), einem Blaskopf (4), einem Kühlring (8), einem Kalibrierkorb (7), einer Flachlegeeinheit (9) und einem reversierenden Wendeabzug (15),
wobei in dem Extruder (2) Kunststoffe in granulierter Form zu einer viskosen Masse plastifizierbar ist, wobei die Masse in dem Blaskopf (4) ringförmig ausbildbar ist und durch eine Ringdüse (5) des Blaskopfes (4) entweicht, wobei die Masse einen Folienschlauch (6) bildet,
wobei der Folienschlauch (6) mit vergrößertem Durchmesser in den Kalibrierkorb (7) führbar ist, wobei der der Folienschlauch (6) nach dem Kalibrierkorb der Flachlegeeinheit (9) zuführbar ist, in der der kreisrunde Folienschlauch (6) einen ellipsenförmigen Querschnitt mit einer zunehmenden Exzentrizität bildet, welche von zwei Abzugswalzen (10) zu einer doppellagigen Folienbahn (24) ausbildbar ist,
mit einer Reckanlage (30) zum monoaxialen Verstrecken der flachgelegten Folie (24) in Maschinenrichtung,
mit einem ersten Dünnstellen-Regelsystem (18, 40), das segmentierte Regelzonen im Kühlring (8) zur Ausprägung von Dünnstellen (13) derart ansteuert, dass beim Verstrecken eine Folie (24) mit einem Dickenprofil mit möglichst geringen Abweichungen von der mittleren Foliendicke über die gesamte Folienbreite hergestellt wird,
mit einem zweiten Dünnstellen-Regelsystem **dadurch gekennzeichnet, dass** das zweite Dünnstellen-Regelsystem zwei gegenüberliegende Wärmequellen (101, 103) zwischen Kalibrierkorb (7) und Flachlegeeinheit (9) ansteuert, wobei das zweite Dünnstellen-Regelsystem dem ersten Dünnstellen-Regelsystem aufschaltbar ist.

2. Vorrichtung nach Anspruch 1,
**dadurch gekennzeichnet, dass**
sich die zwei gegenüberliegenden Wärmequellen (101, 103) am unteren Rand der beiden dreieckigen Seitenbereiche der Flachlegeeinheit (9) befinden.

3. Vorrichtung nach einem der vorstehenden Ansprüche
**dadurch gekennzeichnet, dass**
die beiden Wärmequellen (101, 103) auf Traversen (102, 104) fixiert sind, wobei sich die Traversen (102, 104) synchron mit einer Reversierbewegung der Flachlegeeinheit (9) mitbewegen

4. Vorrichtung nach einem der vorstehenden Ansprüche
**dadurch gekennzeichnet, dass**
die Wärmequellen (101, 103) entlang und quer zu den Traversen (102, 104) justierbar sind.

5. Vorrichtung nach einem der vorstehenden Ansprüche
**dadurch gekennzeichnet, dass**
das zweite Dünnstellen-Regelsystem aufschaltbar ist, wenn die segmentierten Regelzonen des ersten Dünnstellen-Regelsystems sich am Leistungslimit befinden.

6. Vorrichtung nach einem der vorstehenden Ansprüche, **dadurch gekennzeichnet, dass** das zweite Dünnstellen-Regelsystem aufschaltbar ist, um die Dünnstellen exakt im Bereich der beiden Falzkanten der Flachlegeeinheit (9) zu regeln.

7. Vorrichtung nach einem der vorstehenden Ansprüche, **dadurch gekennzeichnet, dass** in Transportrichtung gesehen hinter der Reckanlage (30) eine Messeinheit (38, 45) zur Erfassung des Dickenprofils der produzierten Folie (34) vorgesehen ist.

## Claims

1. Device for producing inline-oriented tubular films (6, 24) in a blowing process,
with a blown-film system (1) consisting of an extruder (2), a blow head (4), a cooling ring (8), a calibration cage (7), a lay-flat unit (9) and a reversing turn-around take-off means (15),
wherein plastics materials in granulated form can be plasticized in the extruder (2) to form a viscous mass, wherein the mass can be formed into a ring shape in the blow head (4) and escapes through an annular nozzle (5) of the blow head (4), wherein the mass forms a film tube (6),
wherein the film tube (6) with an enlarged diameter can be guided into the calibration cage (7), wherein the film tube (6) after the calibration cage can be fed to the lay-flat unit (9), in which the circular film tube (6) forms an elliptical cross-section with an increasing eccentricity which can be formed by two take-off rollers (10) into a double-layered film web (24),
with an orientation system (30) for monoaxial drawing of the laid-flat film (24) in the machine direction,
with a first thin-points regulation system (18, 40) which controls segmented regulation zones in the cooling ring (8) in order to mark thin points (13) such that, during drawing, a film (24) is produced which has a thickness profile having the lowest possible deviations from the average film thickness over the entire film width,
with a second thin-points regulation system, **characterized in that** the second thin-points regulation system controls two opposite heat sources (101, 103) between the calibration cage (7) and the lay-flat unit (9), wherein the second thin-points regulation system can be connected to the first thin-points regulation system.

2. Device according to claim 1,
**characterized in that** the two opposite heat sources (101, 103) are located at the lower edge of the two triangular side areas of the lay-flat unit (9).

3. Device according to any one of the preceding claims,
**characterized in that**
the two heat sources (101, 103) are fixed on traverses (102, 104), wherein the traverses (102, 104) move synchronously with a reversing movement of the lay-flat unit (9).

4. Device according to any one of the preceding claims,
**characterized in that**
the heat sources (101, 103) can be adjusted along and across the traverses (102, 104).

5. Device according to any one of the preceding claims, **characterized in that**
the second thin-points regulation system can be connected when the segmented regulation zones of the first thin-points regulation system are at their power limit.

6. Device according to any one of the preceding claims, **characterized in that** the second thin-points regulation system can be connected in order to regulate the thin points exactly in the area of the two folding edges of the lay-flat unit (9).

7. Device according to any one of the preceding claims, **characterized in that** a measuring unit (38, 45) is provided downstream of the orientation unit (30), as viewed in the transport direction, for detecting the thickness profile of the film (34) produced.

## Revendications

1. Dispositif de fabrication de films tubulaires (6, 24) orientés en ligne dans un procédé de soufflage,
avec une installation de film soufflé (1) se composant d'une extrudeuse (2), d'une tête de soufflage (4), d'un anneau de refroidissement (8), d'une cage d'étalonnage (7), d'une unité de pose à plat (9) et d'un tireur réversible (15),
dans lequel des matières plastiques sous forme granulée peuvent être plastifiées dans l'extrudeuse en une masse visqueuse, dans lequel la masse peut être formée en anneau dans la tête de soufflage (4) et s'échappe par une buse annulaire (5) de la tête de soufflage (4), dans lequel la masse forme un tube de film (6),
dans lequel le tube de film (6) avec un diamètre agrandi peut être guidé dans la cage d'étalonnage (7), dans lequel le tube de film (6) peut être amené après la cage d'étalonnage à l'unité de pose à plat (9), dans laquelle le tube de film (6) circulaire forme une section transversale en ellipse avec une excentricité croissante qui peut être formée par deux rouleaux d'extraction (10) en une bande de film (24) à double couche,
avec une installation d'étirage (30) pour l'étirage monoaxial du film (24) posé à plat dans le sens de la machine,
avec un premier système de régulation de points minces (18, 40) qui commande des zones de régulation segmentées dans l'anneau de refroidissement (8) pour le marquage de points minces (13) de telle sorte que, lors de l'étirage, un film (24) avec un profilé d'épaisseur soit fabriqué avec des déviations les plus faibles possible de l'épaisseur de film médiane sur toute la largeur de film,
avec un second système de régulation de points minces, **caractérisé en ce que** le second système de régulation de points minces commande deux sources de chaleur (101, 103) opposées entre la cage d'étalonnage (7) et l'unité de pose à plat (9), dans lequel le second système de régulation de points minces peut être connecté au premier système de régulation de points minces.

2. Dispositif selon la revendication 1,
**caractérisé en ce que** les deux sources de chaleur (101, 103) opposées se trouvent au niveau du bord inférieur des deux zones latérales triangulaires de l'unité de pose à plat (9).

3. Dispositif selon l'une quelconque des revendications précédentes,
**caractérisé en ce que**
les deux sources de chaleur (101, 103) sont fixées sur des traverses (102, 104), dans lequel les traverses (102, 104) se déplacent de manière synchrone avec un mouvement d'inversion de l'unité de pose à plat (9).

4. Dispositif selon l'une quelconque des revendications précédentes,
**caractérisé en ce que**
les sources de chaleur (101, 103) peuvent être ajustées le long et transversalement aux traverses (102, 104).

5. Dispositif selon l'une quelconque des revendications précédentes, **caractérisé en ce que**
le second système de régulation de points minces peut être connecté lorsque les zones de régulation segmentées du premier système de régulation de points minces se trouvent au niveau de la limite de puissance.

6. Dispositif selon l'une quelconque des revendications précédentes, **caractérisé en ce que** le second système de régulation de points minces peut être connecté afin de réguler les points minces exactement dans la zone des deux arêtes de pliage de l'unité de pose à plat (9).

7. Dispositif selon l'une quelconque des revendications précédentes, **caractérisé en ce qu'**une unité de mesure (38, 45) est prévue en aval de l'installation d'étirage (30), vue dans le sens de transport, pour la détection du profilé d'épaisseur du film produit (34).
